# FASCICULE DE BREVET EUROPEEN

(11) **EP 3 617 075 B1**
(45) Date de publication et mention de la délivrance du brevet: **31.03.2021**
(21) Numéro de dépôt: 19194488.3
(22) Date de dépôt: 29.08.2019
(51) Int. Cl.: B64G 1/64, F42B 15/38

(54) **DISPOSITIF DE LIAISON LOCALISEE A SEPARATION COMMANDEE COMPRENANT UNE COUCHE DE LIAISON MULTIDIRECTIONNELLE**
VORRICHTUNG ZUR LOKALISIERTEN VERBINDUNG MIT GESTEUERTER TRENNUNG, DIE EINE MULTIDIREKTIONALE VERBINDUNGSSCHICHT UMFASST
LOCALISED LINK DEVICE FOR CONTROLLED SEPARATION COMPRISING A LAYER WITH MULTIDIRECTIONAL LINK

(30) Priorité: 31.08.2018 FR 1857870
(43) Date de publication de la demande: 04.03.2020
(73) Titulaire: ArianeGroup SAS, 75015 Paris (FR)
(72) Inventeur: MEDINA, Felipe, 78500 Sartrouville (FR); GLAVIER, Ludovic, 78480 Verneuil sur Seine (FR)
(74) Mandataire: Brevalex

(56) Documents cités:
- WO-A1-2015/014942
- FR-A1- 3 041 609
- FR-A1- 3 055 887

## Description

### DOMAINE TECHNIQUE

La présente invention se rapporte au domaine des dispositifs de liaison conçus pour relier un premier élément et un deuxième élément et permettre de séparer sur commande les premier et deuxième éléments l'un de l'autre.

Elle concerne en particulier la liaison structurale entre une charge utile, telle qu'un satellite ou un microsatellite, et un distributeur de charge utile, c'est-à-dire une structure de support conçue pour loger sous la coiffe d'un engin aéronautique ou spatial et porter une ou plusieurs charges utiles, une telle structure de support étant parfois dénommée « dispenser » d'après la terminologie anglo-saxonne.

L'invention peut néanmoins également être appliquée à la liaison entre une charge utile et un étage de lanceur spatial, à la liaison entre différentes parties d'un engin aéronautique ou spatial, ou plus généralement à la liaison localisée de tout type de pièces devant être séparées sur commande dans un processus bref (de l'ordre de la dizaine de millisecondes) et minimisant les chocs subis par les pièces.

### ÉTAT DE LA TECHNIQUE ANTÉRIEURE

La multiplication des lancements de satellites et microsatellites et la recherche de réduction des coûts de lancement conduisent notamment au développement de techniques de mutualisation des lancements, par lesquelles plusieurs satellites ou autres charges utiles sont embarqués à bord d'un même lanceur spatial et largués simultanément ou successivement au cours d'un même vol.

À cet effet, les distributeurs de charge utile, ou « dispensers », sont des systèmes destinés à supporter, au sein d'un même lanceur spatial, plusieurs charges utiles, telles que des satellites, ou des microsatellites (c'est-à-dire des satellites de masse typiquement comprise entre 150 kilogrammes et 3 tonnes environ).

L'accrochage de chaque charge utile à un tel distributeur requiert des dispositifs de liaison capables de supporter l'intensité des efforts subis en vol, tout en préservant les charges utiles de chocs qui seraient susceptibles de les endommager lors du largage.

De plus, les dispositifs de liaison doivent présenter une faible dispersion de leurs temps de réaction, c'est-à-dire du temps s'écoulant entre un ordre de séparation et la séparation effective, afin de permettre la maîtrise de la poussée induite par la mise en œuvre du processus de séparation opéré au sein de chacun des dispositifs de liaison, en cas de déclenchement simultané de plusieurs de ces dispositifs de liaison.

Il est connu d'accrocher une charge utile à un distributeur au moyen de dispositifs de liaison comprenant deux embases fixées respectivement à la charge utile et au distributeur et reliées l'une à l'autre par des moyens de liaison déconnectables sur commande, comme décrit par exemple dans le document EP1196326. De tels moyens de liaison déconnectables comprennent par exemple au moins un écrou de rétention segmenté, c'est-à-dire formé de plusieurs secteurs d'écrou, les secteurs étant maintenus ensembles par un élément fusible ou par un élément déplaçable sous l'effet d'un organe moteur.

Dans un tel dispositif de liaison, le déclenchement de la fusion de l'élément fusible, ou le déclenchement d'un déplacement de l'élément déplaçable, provoque la dislocation de l'écrou de rétention et donc la séparation de la charge utile et du distributeur.

Toutefois, les dispositifs de liaison de type connu présentent, selon leur configuration, au moins l'un des inconvénients parmi le fait d'induire des chocs trop puissants lors du largage et le fait de présenter une dispersion trop importante de leurs temps de réaction.

Par ailleurs, la demanderesse a présenté, dans les documents WO2015/014942 et WO2015/014943, des dispositifs de liaison conçus pour la liaison d'étages de lanceurs spatiaux ou d'autres éléments d'engins aéronautiques ou spatiaux, ces systèmes comprenant une couche adhésive de forme cylindrique ou tronconique, et de la thermite destinée à provoquer sur commande un échauffement de la couche adhésive pour lui faire perdre son pouvoir adhésif.

Ces dispositifs de liaison sont des dispositifs annulaires s'étendant le long de la circonférence d'étages de lanceur spatial ou d'autres parties cylindriques, et sont donc destinés à assurer une liaison linéaire répartie sur la circonférence des pièces à relier. Du fait de leur forme, ces dispositifs ne sont pas adaptés à l'accrochage de charges utiles à un distributeur, ce type d'accrochage reposant en général sur une ou plusieurs liaisons localisées afin de permettre par exemple l'agencement de plusieurs charges utiles autour d'un distributeur cylindrique ou parallélépipédique, ou sur un distributeur plan.

Des dispositifs de liaison localisée ont par ailleurs été présentés dans le document WO2015/014941 de la demanderesse. Ces dispositifs de liaison comprennent une couche adhésive de forme plane. Un dispositif de liaison à séparation commandée par effet thermique non pyrotechnique à temps de réaction réduit est divulgué dans le document FR 3 041 609.

Ces dispositifs de liaison ne sont toutefois pas optimisés pour l'accrochage d'une charge utile à un distributeur, eu égard aux efforts de liaison impliqués par ce type d'application et à la sévérité des exigences en matière de limitation de masse habituellement appliquées aux équipements destinés à loger sous la coiffe d'un engin aéronautique ou spatial.

### EXPOSÉ DE L'INVENTION

L'invention a notamment pour but de proposer un dispositif de liaison permettant l'accrochage d'une charge utile sur un distributeur ou, plus généralement, permettant la liaison temporaire de deux parties d'un engin aéronautique ou spatial, et ne présentant par les inconvénients susmentionnés.

L'invention a plus généralement pour objet un dispositif de liaison capable de relier un premier élément et un deuxième élément et permettre de séparer sur commande les premier et deuxième éléments l'un de l'autre en un temps de réaction bref, de préférence inférieur à une demi-seconde, avec une faible dispersion du temps de réaction, et minimisant le choc subi par les éléments lors de la séparation.

À cet effet, un dispositif de liaison selon l'invention comprend :
- une première embase apte à permettre la fixation du dispositif de liaison sur une surface du premier élément,
- une première paroi de liaison formant une excroissance à partir de la première embase, et présentant, d'un premier côté, une surface interne délimitant un volume intérieur situé du côté de la première embase, et, d'un deuxième côté opposé au premier côté, une première surface de liaison,
- une deuxième embase apte à permettre la fixation du dispositif de liaison sur une surface du deuxième élément,
- une deuxième paroi de liaison solidaire de la deuxième embase et présentant une deuxième surface de liaison recouvrant la première paroi de liaison de manière à ménager un espace entre les première et deuxième surfaces de liaison,
- une couche de liaison, constituée d'une couche de matériau adhésif ou d'une brasure, agencée dans ledit espace au contact de chacune des première et deuxième surfaces de liaison, de sorte que la couche de liaison présente une forme telle que, vue en section dans tout plan localement orthogonal à la première embase, la couche de liaison s'étend selon au moins deux directions distinctes, et
- un matériau thermogène agencé dans le volume intérieur de manière à permettre un échauffement de la couche de liaison par conduction thermique au travers de la première paroi de liaison.

La conformation multidirectionnelle de la couche de liaison permet de favoriser un travail de la couche de liaison à la fois en traction/compression et en cisaillement ainsi qu'une transmission d'une partie des efforts par appui mécanique réciproque entre des portions des première et deuxième parois de liaison au travers de la couche de liaison, lorsque le dispositif de liaison selon l'invention relie l'un à l'autre un premier élément, fixé sur - ou solidaire de - la première embase, et un deuxième élément, fixé sur- ou solidaire de - la deuxième embase.

L'efficacité de la liaison permise par la conformation multidirectionnelle de la couche de liaison permet au dispositif de liaison une transmission efficace d'efforts entre les éléments reliés, tout en étant compact et de faible masse, et donc adapté à une liaison localisée, en particulier à la liaison entre une charge utile telle qu'un satellite ou un microsatellite et un distributeur de charge utile.

Du fait de l'utilisation d'une couche adhésive et de thermite, les chocs sont minimisés et les temps de réaction sont réduits de même que la dispersion de ces derniers.

Suivant d'autres aspects avantageux de l'invention, le dispositif de liaison présente une ou plusieurs des caractéristiques suivantes, prise(s) isolément ou suivant toutes les combinaisons techniquement possibles :
- la deuxième surface de liaison présente une forme homothétique de la première surface de liaison ;
- la couche de liaison présente une forme symétrique par rapport à un axe et telle que, vue en section dans tout plan contenant l'axe, la couche de liaison s'étend selon au moins deux directions distinctes ;
- la couche de liaison présente une section, centrée sur l'axe, en forme de U à fond plat ou incurvé et à branches parallèles ou divergentes, ou en forme de dôme, de cône, ou de tronc de cône ;
- le dispositif de liaison comprend en outre un support inerte logé dans le volume intérieur et présentant une surface externe en regard de la première paroi de liaison, et le matériau thermogène est disposé sous la forme d'une couche ayant deux surfaces opposées qui sont respectivement en contact avec la surface externe du support inerte et en regard de la surface interne de la première paroi de liaison ou en contact avec la surface interne de la première paroi de liaison ;
- la surface externe du support inerte présente une forme homothétique de la surface interne de la première paroi de liaison ;
- la première embase comprend une plaque de montage pourvue d'un orifice débouchant dans le volume intérieur, et solidaire de la première paroi de liaison, et un couvercle monté dans l'orifice de manière à obturer l'orifice, moyennant quoi le volume intérieur est défini entre la surface interne de la première paroi de liaison et le couvercle.

L'invention concerne également un ensemble, comprenant deux éléments présentant des surfaces respectives sur lesquelles sont respectivement fixées la première embase et la deuxième embase d'au moins un dispositif de liaison du type décrit ci-dessus qui relie ainsi l'un à l'autre les deux éléments.

L'invention concerne encore un engin aéronautique ou spatial, comprenant au moins un ensemble du type décrit ci-dessus.

Dans des modes de réalisation préférés de l'invention, les deux éléments sont respectivement une charge utile et un distributeur de charge utile.

De préférence, les deux éléments sont reliés l'un à l'autre par plusieurs dispositifs de liaison du type décrit ci-dessus.

Dans des modes de réalisation préférés de l'invention, l'engin aéronautique ou spatial comprend au moins une autre charge utile reliée au distributeur de charge utile par au moins un autre dispositif de liaison du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique de côté d'un lanceur spatial selon un mode de réalisation préféré de l'invention ;
- la figure 2 est une vue schématique de côté d'un distributeur sur lequel deux satellites sont fixés au moyen de dispositifs de liaison selon un mode de réalisation préféré de l'invention ;
- les figures 3 et 4 sont des vues schématiques en perspective d'un dispositif de liaison selon le mode de réalisation préféré de l'invention ;
- la figure 5 est une vue schématique en coupe axiale du dispositif de liaison des figures 3 et 4 ;
- la figure 5A est une vue agrandie d'une partie V de la figure 5 ;
- la figure 6 est une vue schématique en perspective d'un autre distributeur sur lequel deux satellites sont fixés au moyen de dispositifs de liaison selon le mode de réalisation préféré de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

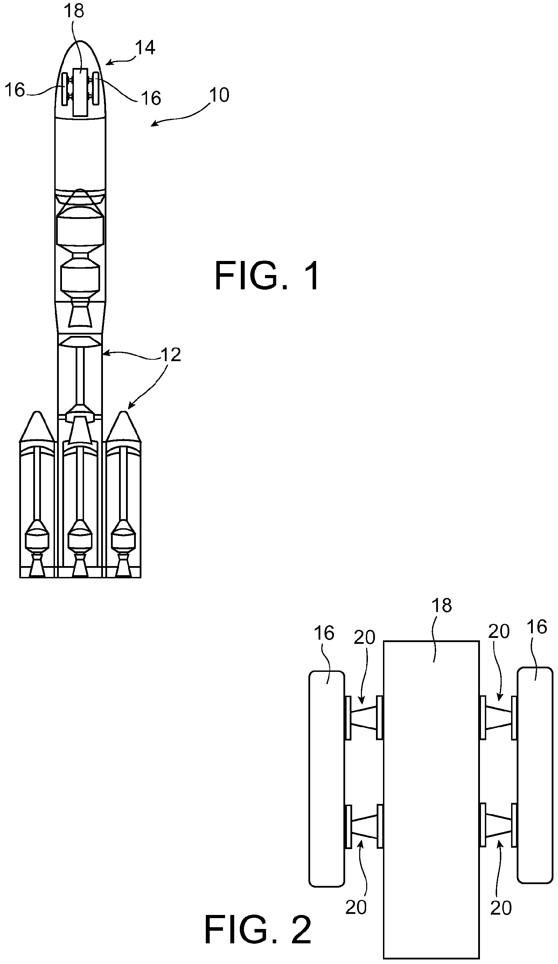

La figure 1 illustre schématiquement un lanceur spatial 10 comportant des étages propulseurs 12 inférieurs et intermédiaires, et un étage supérieur 14 logeant des charges utiles 16, telles que des satellites ou microsatellites à satelliser, montées sur un distributeur de charge utile 18.

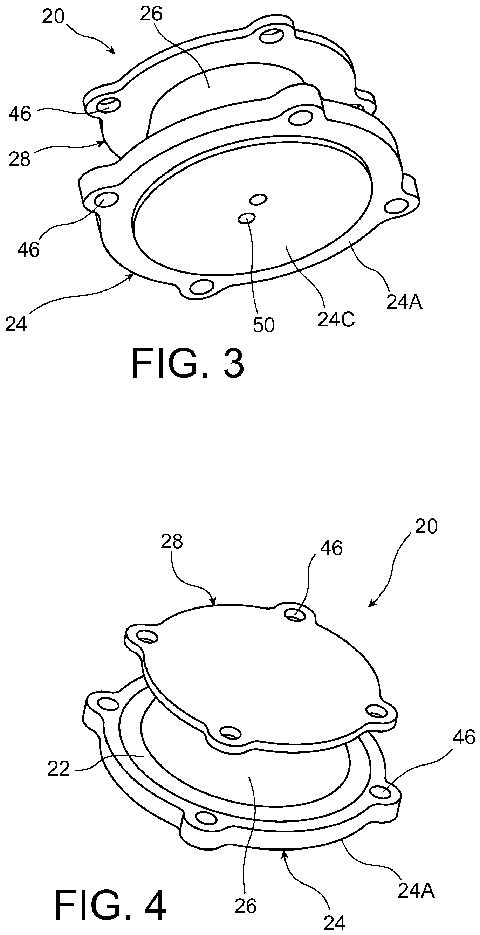

La figure 2 montre, schématiquement et à plus grande échelle, le distributeur de charge utile 18 ainsi que deux charges utiles 16 montées sur celui-ci, chacune au moyen de plusieurs dispositifs de liaison 20 selon un mode de réalisation préféré de l'invention, dont la configuration apparaît en détail sur les figures 3 à 5.

Comme cela ressort de l'ensemble des figures 3 à 5, chacun des dispositifs de liaison 20 comprend :
- une première embase 24 destinée à être fixée sur une surface 18A du distributeur de charge utile 18, ou plus généralement, de l'une des pièces à relier,
- une première paroi de liaison 22 formant une excroissance à partir de la première embase 24, et présentant, d'un premier côté, une surface interne 22A délimitant un volume intérieur V situé du côté de la première embase 24, et, d'un deuxième côté opposé au premier côté, une première surface de liaison 22B,
- une deuxième embase 28 destinée à être fixée sur une surface 16A de la charge utile 16, ou plus généralement, de l'autre pièce à relier,
- une deuxième paroi de liaison 26 solidaire de la deuxième embase 28 et présentant une deuxième surface de liaison 26A recouvrant la première paroi de liaison 22 de manière à ménager un espace S entre la première surface de liaison 22B et la deuxième surface de liaison 26A,
- une couche de liaison 30, constituée préférentiellement d'une couche de matériau adhésif tel qu'une résine thermodurcissable, ou en variante, d'une brasure, et agencée dans l'espace S au contact de la première surface de liaison 22B et de la deuxième surface de liaison 26A, de sorte que la couche de liaison 30 présente une forme telle que, vue en section dans tout plan localement orthogonal à la première embase 24, la couche de liaison 30 s'étend selon au moins deux directions distinctes (cette propriété étant appelée caractère « multidirectionnel » dans l'ensemble de cette description),
- un matériau thermogène 32 agencé dans le volume intérieur V, de manière à permettre un échauffement de la couche de liaison 30 par conduction thermique au travers de la première paroi de liaison 22, un tel échauffement étant destiné à faire fondre la couche de liaison 30 ou à provoquer une défonctionnalisation thermique de la couche de liaison 30, c'est-à-dire la perte des propriétés adhésives de la couche de liaison sous l'effet d'une élévation de la température de la couche de liaison.

Le matériau thermogène 32 est, de manière générale, un matériau capable de générer de la chaleur sur commande.

De préférence, le matériau thermogène 32 est de la thermite. On entend par-là couvrir toutes les formes de thermite, y compris la nanothermite (également dénommée superthermite).

La première paroi de liaison 22 est réalisée en un matériau relativement bon conducteur de la chaleur, typiquement un métal ou un alliage métallique, afin de permettre une propagation rapide de la chaleur générée par le matériau thermogène 32 jusque dans la couche de liaison 30.

La deuxième paroi de liaison 26 est de préférence également réalisée dans un métal ou un alliage métallique.

Le ou les matériaux constituant les parois de liaison 22 et 26 présentent des points de fusion plus élevés que le point de fusion ou de défonctionnalisation de la couche de liaison 30.

Le couche de liaison 30 est de préférence réalisée en un matériau organique, telle qu'une résine thermodurcissable, ayant notamment pour avantage d'être un matériau faiblement conducteur de la chaleur. Ainsi, la chaleur générée par le matériau thermogène 32 se concentre dans la couche de liaison 30 sans être dispersée par cette dernière dans la deuxième paroi de liaison 26.

Dans des modes de réalisation préférés de l'invention, la couche de liaison 30, la première surface de liaison 22B, et la deuxième surface de liaison 26A, présentent chacune une forme respective symétrique par rapport à un axe A. Cette forme est en particulier telle que, vue en section dans tout plan contenant l'axe A, la couche de liaison 30 s'étend selon au moins deux directions distinctes.

En particulier, la forme de ces éléments est une forme de révolution autour de l'axe A. D'autres formes, par exemple à section polygonale centrée selon l'axe A, sont également possible.

Différentes formes divergentes le long de l'axe A, dans la direction allant de la deuxième embase 28 vers la première embase 24, sont particulièrement avantageuses pour procurer le caractère multidirectionnel des éléments précités.

Ainsi, dans le mode de réalisation illustré, ces éléments ont chacun une forme de révolution à section en forme de U à fond 40 plat et à branches 42 rectilignes divergentes, à la manière d'un trapèze (les références numériques 40 et 42 sont par exemple données pour la première surface de liaison 22B).

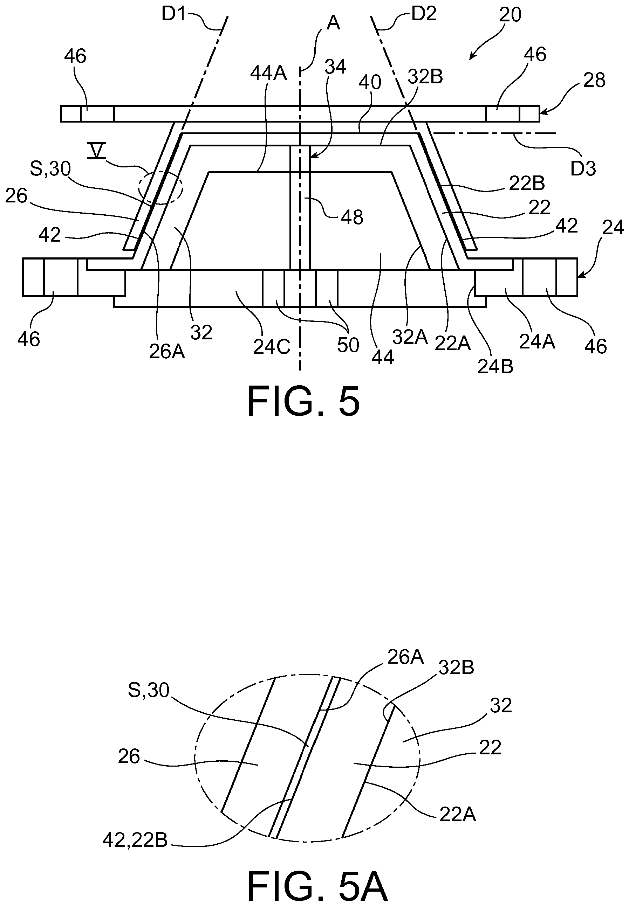

Dans cet exemple, lorsqu'elle est vue en section selon tout plan contenant l'axe A, la couche de liaison 30 s'étend donc selon trois directions D1, D2, D3 distinctes (figure 5), correspondant respectivement aux directions des deux branches 42 et à la direction du fond 40.

En variante, le fond du U peut être incurvé, et/ou les branches peuvent êtres rectilignes et parallèles, ou encore incurvées.

En variante encore, ces éléments peuvent être à section en forme de dôme ou de cône.

Selon une autre variante, la couche de liaison 30 peut ne pas occuper l'espace situé en regard du fond 40 des première et deuxième surfaces de liaison 22B, 26A, et être cantonnée dans l'espace situé en regard des branches 42, de manière à présenter par exemple une forme de tronc de cône.

Il est à noter que dans l'exemple illustré, la première paroi de liaison 22 forme une excroissance fermée. Autrement dit, la première paroi de liaison 22 est une paroi pleine ayant un pourtour s'étendant de manière continue tout autour de l'axe A et par lequel la première paroi de liaison 22 est reliée à la première embase 24.

Dans le mode de réalisation illustré, la deuxième surface de liaison 26A présente une forme homothétique de la première surface de liaison 22B. Par conséquent, l'espace S, la première surface de liaison 22B et la deuxième surface de liaison 26A présentent des formes homothétiques les unes des autres, c'est-à-dire semblables à un facteur d'échelle près.

Dans le mode de réalisation illustré, la surface interne 22A présente également une forme homothétique de la première surface de liaison 22B.

Chacun des dispositifs de liaison 20 comprend en outre un support inerte 44 (figure 5) logé dans le volume intérieur V et présentant une surface externe 44A en regard de la première paroi de liaison 22. De plus, le matériau thermogène 32 est disposé sous la forme d'une couche ayant deux surfaces opposées 32A et 32B dont la première est par exemple au contact de la surface externe 44A du support inerte 44, tandis que la seconde est de préférence légèrement espacée de la surface interne 22A de la première paroi de liaison 22.

Par « inerte », il faut comprendre que le support 44 n'a pas d'autre propriété que d'occuper une partie du volume intérieur V de manière à supporter la couche de matériau thermogène 32, et que le support 44 n'intervient en aucune autre manière dans le fonctionnement du dispositif de liaison 20, qui sera détaillé dans ce qui suit.

Dans le mode de réalisation illustré, la surface externe 44A du support inerte 44 présente une forme homothétique de la surface interne 22A de la première paroi de liaison 22. Par conséquent, les surfaces opposées 32A et 32B de la couche de matériau thermogène 32 présentent chacune également une forme homothétique de la surface interne 22A de la première paroi de liaison 22.

Par ailleurs, la première embase 24 comprend par exemple une première plaque de montage 24A, pourvue d'un orifice 24B débouchant dans le volume intérieur, et par laquelle la première embase 24 est solidarisée à la première paroi de liaison 22. La première embase 24 comprend en outre un couvercle 24C monté dans l'orifice 24B de la première plaque de montage 24A de manière à obturer l'orifice 24B. Le volume intérieur V est ainsi défini entre la surface interne 22A de la première paroi de liaison 22 et le couvercle 24C. Autrement dit, le couvercle 24C est agencé d'un côté opposé à la première paroi 22 par rapport au volume intérieur V, de sorte que le couvercle 24C ferme le volume intérieur V.

La deuxième embase 28 est par exemple formée d'une deuxième plaque de montage, à laquelle la deuxième paroi de liaison 26 est solidarisée.

Chacune des première et deuxième embases 24 et 28 intègre des moyens destinés à la fixation de ces embases respectivement au distributeur 18 et à une charge utile 16, ou plus généralement, aux premier et deuxième éléments que le dispositif de liaison 20 est destiné à relier. Ces moyens sont par exemple constitués d'orifices 46, répartis en périphérie de chacune des première et deuxième embases 24 et 28, et conformés pour permettre le passage d'organes de fixation traversants de type boulons ou rivets.

De plus, la solidarisation des première et deuxième embases 24 et 28 respectivement aux première et deuxième parois de liaison 22 et 26 est de préférence réalisée par soudage.

Par ailleurs, le dispositif de liaison 20 comporte par exemple un organe d'initiation 48 réalisé en un second matériau thermogène ayant une vitesse de combustion plus élevée que celle du matériau thermogène précité, et par exemple en forme de barreau s'étendant le long de l'axe A au travers d'un alésage central du support inerte 44, ainsi qu'un logement formé dans le couvercle 24C pour accueillir un organe d'amorçage 50, par exemple de type électro-pyrotechnique, configuré pour permettre l'activation de l'organe d'initiation 48. Après assemblage, l'ensemble constitué de l'organe d'initiation 48 et de l'organe d'amorçage 50 forme un dispositif d'amorçage 34.

La configuration du dispositif de liaison 20 le rend particulièrement adapté à assurer une liaison localisée entre un distributeur 18 et une charge utile 16 telle qu'un satellite ou un microsatellite, typiquement au moyen de plusieurs de ces dispositifs de liaison 20.

Une telle liaison s'opère simplement en fixant l'une des embases 24 et 28 de chaque dispositif de liaison 20 au distributeur 18 et en fixant l'autre embase de chaque dispositif de liaison 20 à la charge utile, par exemple par boulonnage.

Quelle que soit l'orientation des dispositifs de liaison 20, la conformation multidirectionnelle de la couche de liaison 30 de chacun de ces dispositifs permet à cette couche de liaison 30 de travailler à la fois en traction/compression et en cisaillement et de transmettre une partie des efforts par appui mécanique réciproque entre des portions des première et deuxième parois de liaison 22 et 26 au travers de la couche de liaison 30. Chaque dispositif de liaison 20 assure ainsi une liaison localisée optimale entre le distributeur 18 et la charge utile 16.

Ensuite, lorsqu'un largage de la charge utile 16 est souhaité, un déclenchement de l'organe d'amorçage 50 de chaque dispositif de liaison 20 provoque un échauffement rapide du matériau thermogène 32. La chaleur ainsi générée se propage par conduction thermique au travers de la première paroi de liaison 22, jusque dans la couche de liaison 30, et induit ainsi la fusion ou la défonctionnalisation de la couche de liaison 30, aboutissant à la dislocation ou à la perte d'adhérence de cette dernière. La liaison entre le distributeur 18 et la charge utile 16 cesse alors d'être assurée.

Le processus de séparation se caractérise notamment par des chocs minimisés et des temps de réaction réduits, et par une dispersion réduite des temps de réaction entre les dispositifs de liaison 20.

Dans un exemple de réalisation, les temps de réaction obtenus ont ainsi été de l'ordre de 100 millisecondes avec une dispersion inférieure à 10%.

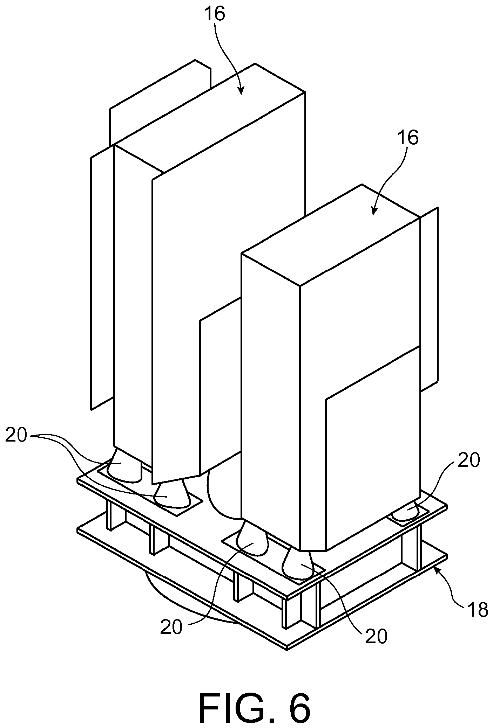

La figure 6 illustre un autre contexte d'utilisation des dispositifs de liaison 20, dans lequel ces derniers relient un distributeur 18 plan à des charges utiles 16, telles que deux satellites, disposées au-dessus d'une même surface plane 18A du distributeur 18.

## Revendications

1. Dispositif de liaison (20) pour relier un premier élément (18) et un deuxième élément (16) et permettre de séparer sur commande les premier et deuxième éléments l'un de l'autre, le dispositif comprenant :
- une première embase (24) apte à permettre la fixation du dispositif de liaison (20) sur une surface du premier élément (18),
- une première paroi de liaison (22) formant une excroissance à partir de la première embase (24), et présentant, d'un premier côté, une surface interne (22A) délimitant un volume intérieur (V) situé du côté de la première embase (24), et, d'un deuxième côté opposé au premier côté, une première surface de liaison (22B),
- une deuxième embase (28) apte à permettre la fixation du dispositif de liaison (20) sur une surface du deuxième élément (16),
- une deuxième paroi de liaison (26) solidaire de la deuxième embase (28) et présentant une deuxième surface de liaison (26A) recouvrant la première paroi de liaison (22) de manière à ménager un espace (S) entre les première et deuxième surfaces de liaison (22B, 26A),
- une couche de liaison (30), constituée d'une couche de matériau adhésif ou d'une brasure, agencée dans ledit espace (S) au contact de chacune des première et deuxième surfaces de liaison (22B, 26A), de sorte que la couche de liaison (30) présente une forme telle que, vue en section dans tout plan localement orthogonal à la première embase (24), la couche de liaison (30) s'étend selon au moins deux directions distinctes, **caractérisé en ce que**
- un matériau thermogène (32) est agencé dans le volume intérieur (V) de manière à permettre un échauffement de la couche de liaison (30) par conduction thermique au travers de la première paroi de liaison (22).

2. Dispositif de liaison selon la revendication 1, dans lequel la deuxième surface de liaison (26A) présente une forme homothétique de la première surface de liaison (22B).

3. Dispositif de liaison selon la revendication 1 ou 2, dans lequel la couche de liaison (30) présente une forme symétrique par rapport à un axe (A) et telle que, vue en section dans tout plan contenant l'axe (A), la couche de liaison (30) s'étend selon au moins deux directions distinctes.

4. Dispositif de liaison selon la revendication 3, dans lequel la couche de liaison (30) présente une section, centrée sur l'axe (A), en forme de U à fond (40) plat ou incurvé et à branches (42) parallèles ou divergentes, ou en forme de dôme, de cône, ou de tronc de cône.

5. Dispositif de liaison selon l'une quelconque des revendications 1 à 4, comprenant en outre un support inerte (44) logé dans le volume intérieur (V) et présentant une surface externe (44A) en regard de la première paroi de liaison (22), et le matériau thermogène (32) est disposé sous la forme d'une couche ayant deux surfaces opposées (32A, 32B) qui sont respectivement en contact avec la surface externe (44A) du support inerte (44) et en regard de la surface interne (22A) de la première paroi de liaison (22) ou en contact avec la surface interne (22A) de la première paroi de liaison (22).

6. Dispositif de liaison selon la revendication 5, dans lequel la surface externe (44A) du support inerte (44) présente une forme homothétique de la surface interne (22A) de la première paroi de liaison (22).

7. Dispositif de liaison selon l'une quelconque des revendications 1 à 6, dans lequel la première embase (24) comprend une plaque de montage (24A) pourvue d'un orifice (24B) débouchant dans le volume intérieur (V), et solidaire de la première paroi de liaison (22), et un couvercle (24C) monté dans l'orifice (24B) de manière à obturer l'orifice (24B), moyennant quoi le volume intérieur (V) est défini entre la surface interne (22A) de la première paroi de liaison (22) et le couvercle (24C).

8. Ensemble, comprenant au moins un dispositif de liaison (20) selon l'une quelconque des revendications 1 à 7 et deux éléments (16, 18) présentant des surfaces respectives sur lesquelles sont respectivement fixées la première embase (24) et la deuxième embase (28) dudit au moins un dispositif de liaison (20) qui relie ainsi l'un à l'autre les deux éléments (16, 18).

9. Engin aéronautique ou spatial (10), comprenant au moins un ensemble selon la revendication 8.

10. Engin aéronautique ou spatial selon la revendication 9, dans lequel les deux éléments (16, 18) sont respectivement une charge utile et un distributeur de charge utile.

11. Engin aéronautique ou spatial selon la revendication 10, dans lequel les deux éléments (16, 18) sont reliés l'un à l'autre par plusieurs dispositifs de liaison (20) selon l'une quelconque des revendications 1 à 7.

12. Engin aéronautique ou spatial selon la revendication 10 ou 11, comprenant au moins une autre charge utile reliée au distributeur de charge utile par au moins un autre dispositif de liaison (20) selon l'une quelconque des revendications 1 à 7.

## Patentansprüche

1. Verbindungsvorrichtung (20) zum Verbinden eines ersten Elements (18) und eines zweiten Elements (16) und zum Ermöglichen, das erste und das zweite Element auf Befehl voneinander zu trennen, wobei die Vorrichtung enthält:
- eine erste Basis (24), die dazu geeignet ist, die Befestigung der Verbindungsvorrichtung (20) an einer Fläche des ersten Elements (18) zu ermöglichen,
- eine erste Verbindungswand (22), die einen Vorsprung ausgehend von der ersten Basis (24) bildet und auf einer ersten Seite eine Innenfläche (22A), die ein Innenvolumen (V) begrenzt, das sich auf der Seite der ersten Basis (24) befindet, und auf einer der ersten Seite gegenüberliegen zweiten Seite eine erste Verbindungsfläche (22B) aufweist,
- eine zweite Basis (28), die dazu geeignet ist, die Befestigung der Verbindungsvorrichtung (20) an einer Fläche des zweiten Elements (16) zu ermöglichen,
- eine zweite Verbindungswand (26), die fest mit der zweiten Basis (28) verbunden ist und eine zweite Verbindungsfläche (26A) aufweist, die die erste Verbindungswand (22) so abdeckt, dass ein Raum (S) zwischen der ersten und der zweiten Verbindungsfläche (22B, 26A) besteht,
- eine Verbindungsschicht (30), die aus einer Schicht aus Klebstoffmaterial oder einer Verlötung besteht und in dem Raum (S) in Kontakt mit jeder der ersten und zweiten Verbindungsfläche (22B, 26A) angeordnet ist, so dass die Verbindungsschicht (30) eine solche Form hat, dass im Schnitt in einer beliebigen Ebene bereichsweise orthogonal zu der ersten Basis (24) betrachtet die Verbindungsschicht (30) sich in mindestens zwei unterschiedlichen Richtungen erstreckt,
**dadurch gekennzeichnet, dass**
- ein wärmeerzeugendes Material (32) in dem Innenvolumen (V) so angeordnet ist, dass es eine Erwärmung der Verbindungsschicht (30) durch Wärmeleitung durch die erste Verbindungswand (22) hindurch ermöglicht.

2. Verbindungsvorrichtung nach Anspruch 1,
wobei die zweite Verbindungsfläche (26A) eine homothetische Form der ersten Verbindungsfläche (22B) aufweist.

3. Verbindungsvorrichtung nach Anspruch 1 oder 2,
wobei die Verbindungsschicht (30) eine Form aufweist, die in Bezug auf eine Achse (A) symmetrisch und derart ist, dass im Schnitt in einer beliebigen, die Achse (A) enthaltenden Ebene betrachtet die Verbindungsschicht (30) sich in mindestens zwei unterschiedlichen Richtungen erstreckt.

4. Verbindungsvorrichtung nach Anspruch 3, wobei die Verbindungsschicht (30) einen auf die Achse (A) zentrierten Querschnitt aufweist, der U-förmig mit flachem oder gekrümmten Boden (40) und parallelen oder divergierenden Schenkeln (42) ist oder kuppel-, kegel- oder kegelstumpfförmig ist.

5. Verbindungsvorrichtung nach einem der Ansprüche 1 bis 4,
ferner enthaltend einen inerten Träger (44), der in dem Innenvolumen (V) aufgenommen ist und eine Außenfläche (44A) aufweist, die der ersten Verbindungswand (22) zugewandt ist, wobei das wärmeerzeugende Material (32) in Form einer Schicht mit zwei gegenüberliegenden Flächen (32A, 32B) angeordnet ist, die jeweils in Kontakt mit der Außenfläche (44A) des inerten Trägers (44) stehen und der Innenfläche (22A) der ersten Verbindungswand (22) zugewandt sind bzw. in Kontakt mit der Innenfläche (22A) der ersten Verbindungswand (22) stehen.

6. Verbindungsvorrichtung nach Anspruch 5,
wobei die Außenfläche (44A) des inerten Trägers (44) eine homothetische Form der Innenfläche (22A) der ersten Verbindungswand (22) aufweist.

7. Verbindungsvorrichtung nach einem der Ansprüche 1 bis 6,
wobei die erste Basis (24) eine Montageplatte (24A) enthält, die mit einer in das Innenvolumen (V) mündenden Öffnung (24B) versehen ist und fest mit der ersten Verbindungswand (22) verbunden ist, sowie eine Abdeckung (24C), die in der Öffnung (24B) so angebracht ist, dass sie die Öffnung (24B) verschließt, wodurch das Innenvolumen (V) zwischen der Innenfläche (22A) der ersten Verbindungswand (22) und der Abdeckung (24C) definiert ist.

8. Anordnung, enthaltend zumindest eine Verbindungsvorrichtung (20) nach einem der Ansprüche 1 bis 7 und zwei Elemente (16, 18) mit jeweiligen Flächen, an denen die erste Basis (24) bzw. die zweite Basis (28) der zumindest einen Verbindungsvorrichtung (20) befestigt sind, welche die beiden Elemente (16, 18) miteinander verbindet.

9. Luft- oder Raumfahrzeug (10), enthaltend zumindest eine Anordnung nach Anspruch 8.

10. Luft- und Raumfahrzeug nach Anspruch 9,
wobei die beiden Elemente (16, 18) eine Nutzlast bzw. ein Nutzlast-Dispenser sind.

11. Luft- und Raumfahrzeug nach Anspruch 10,
wobei die beiden Elemente (16, 18) durch mehrere Verbindungsvorrichtungen (20) nach einem der Ansprüche 1 bis 7 miteinander verbunden sind.

12. Luft- oder Raumfahrzeug nach Anspruch 10 oder 11,
enthaltend zumindest eine weitere Nutzlast, die mit dem Nutzlast-Dispenser durch zumindest eine weitere Verbindungsvorrichtung (20) nach einem der Ansprüche 1 bis 7 verbunden ist.

## Claims

1. Connection device (20) designed to connect a first element (18) and a second element (16) and to separate the first and second elements from each other on command, the device comprising:
- a first base plate (24) that can be used to fasten the connection device (20) onto a surface of the first element (18),
- a first connection wall (22) forming a protuberance from the first base plate (24) and having an internal surface (22A) delimiting an internal volume (V) located on the side of the first base plate (24) on a first side, and a first connection surface (22B) located on a second side opposite the first side,
- a second base plate (28) that can be used to fasten the connection device (20) onto a surface of the second element (16),
- a second connection wall (26) fixed to the second base plate (28) and having a second connection surface (26A) covering the first connection wall (22) so as to form a space (S) between the first and second connection surfaces (22B, 26A),
- a bonding layer (30) composed of a layer of adhesive material or a weld, formed in said space (S) in contact with each of the first and second connection surfaces (22B, 26A), such that the shape of the bonding layer (30) is such that, when viewed in a section in any plane locally orthogonal to the first base plate (24), the bonding layer (30) extends along at least two distinct directions, **characterized in that**
- a heat-generating material (32) is arranged in the internal volume (V) so as to heat the bonding layer (30) by thermal conduction through the first connection wall (22).

2. Connection device according to claim 1, wherein the shape of the second connection surface (26A) is homothetic with the shape of the first connection surface (22B).

3. Connection device according to claim 1 or 2, wherein the shape of the bonding layer (30) is symmetric relative to an axis (A) and is such that, when seen in section in any plane containing the axis (A), the bonding layer (30) extends along at least two distinct directions.

4. Connection device according to claim 3, wherein the shape of a section through the bonding layer (30) centred on the axis (A) is a flat or curved bottom U (40) with parallel or divergent sides (42), or is in the form of a dome, a cone or a truncated part of a cone.

5. Connection device according to any one of claims 1 to 4, also comprising an inert support (44) housed in the internal volume (V) and having an external surface (44A) facing the first connection wall (22), and the heat-generating material (32) is arranged in the form of a layer with two opposite surfaces (32A, 32B) that are in contact with the external surface (44A) of the inert support (44) and facing the internal surface (22A) of the first connection wall (22) or in contact with the internal surface (22A) of the first connection wall (22), respectively.

6. Connection device according to claim 5, wherein the shape of the external surface (44A) of the inert support (44) is homothetic with the shape of the internal surface (22A) of the first connection wall (22).

7. Connection device according to any one of claims 1 to 6, wherein the first base plate (24) comprises a mounting plate (24A) provided with an orifice (24B) opening up in the internal volume (V) and fixed to the first connection wall (22), and a cover (24C) installed in the orifice (24B) so as to close off the orifice (24B), such that the internal volume (V) is defined between the internal surface (22A) of the first connection wall (22) and the cover (24C).

8. Assembly comprising at least one connection device (20) according to any one of claims 1 to 7 and two elements (16, 18) with respective surfaces, on which are fixed respectively the first base plate (24) and the second base plate (28) of said at least one connection device (20) which thus connects the two elements (16, 18) to each other.

9. Aircraft or space craft (10), comprising at least one assembly according to claim 8.

10. Aircraft or space craft according to claim 9, wherein the two elements (16, 18) are a payload and a payload dispenser respectively.

11. Aircraft or space craft according to claim 10, wherein the two elements (16, 18) are connected to each other by multiple connection devices (20) according to any one of claims 1 to 7.

12. Aircraft or space craft according to claim 10 or 11, comprising at least one other payload connected to the payload dispenser by at least one other connection device (20) according to any one of claims 1 to 7.
